# EUROPEAN PATENT APPLICATION

(11) **EP 4 831 227 A1**
(43) Date of publication of application: **28.10.2026**
(21) Application number: 24907497.2
(22) Date of filing: 19.12.2024
(51) Int. Cl.: C08J 7/04, B32B 27/00, B32B 27/30, C08J 5/18

(54) **FILM, LAMINATE CONTAINING SAME, AND METHOD FOR PRODUCING FIBER-REINFORCED COMPOSITE MATERIAL USING SAME**

(30) Priority: 21.12.2023 JP 2023216325
(71) Applicant: Kuraray Co., Ltd., Kurashiki-shi, Okayama 710-0801 (JP)
(72) Inventor: AKIMUNE, Mao, Kurashiki-shi, Okayama 713-8550 (JP); ISHIUCHI, Yukari, Kurashiki-shi, Okayama 713-8550 (JP); SHIMIZU, Sayaka, Kurashiki-shi, Okayama 713-8550 (JP)
(74) Representative: D Young & Co LLP
(86) International application number: PCT/JP2024/044970
(87) International publication number: WO 2025/135113

(57) **Abstract**

A film, wherein a powder is adhering to at least one face of a polyvinyl alcohol film, wherein a percent area occupancy of the powder is 0.05 to 5% based on the film area. The present invention provides a film superior in workability in molding and releasability from molded bodies, the film being fluorine-free and applicable as a release film or bagging film for use in producing a fiber-reinforced composite material.

## Description

### Technical Field

The present invention relates to a film, a laminate including the film, and a fiber-reinforced composite material with the film.

### Background Art

Fiber-reinforced composite materials are materials reinforced through composite formation of a fibrous material with a resin serving as a matrix, and have high strength, high rigidity, and high impact resistance, in spite of being light-weight. Used as molding methods for fiber-reinforced composite materials are, for example, pultrusion molding, resin transfer molding (RTM), press molding, and autoclave (AC) molding. The AC molding is a molding method in which a prepreg (a fibrous material pre-impregnated with a resin) is laminated onto a mold, and the resultant is covered with a bagging film (a film for making a vacuum state) and depressurized, and thermally cured by pressurizing in an autoclave. The AC molding has an advantage of suitability for producing molded bodies of complex shape or large size, but the long molding cycle and the limited production capability for films of large area have been considered as problems.

Proposed as a release film for use in the AC molding is a release film embossed to allow air present in a gap between a prepreg and the film to escape (Patent Literature 1). Shorter molding cycles and production of high-quality molded bodies can be achieved by the use of the release film, whereas the material of the film is limited to polyolefin or fluorine-containing polymer. Especially recently, various fluorine compounds generated as by-products in producing fluorine-containing polymers have been raising concern about adverse effects on human bodies and the environment, and legal regulations are being introduced therefor. Accordingly, a material that can be an alternative to fluorine-containing polymers has been demanded.

Polyvinyl alcohol (hereinafter, occasionally abbreviated as "PVA") is a hydrophilic polymer having crystallinity. Polyvinyl alcohol films have superior film characteristics (strength, transparency, film-formability, oxygen-gas barrier properties, etc.), and used as polarizing film raw materials and various packaging films. In addition, use of a polyvinyl alcohol film as a release film for producing artificial marble has been disclosed (Patent Literature 2).

### Citation List

### Patent Literature

Patent Literature 1: US 2022-266479 A1
Patent Literature 2: WO 2020/050394 A1

### Summary of Invention

### Technical Problem

An object of the present invention is to provide a film superior in workability in molding and releasability from molded bodies, the film being fluorine-free and applicable as a release film or bagging film for use in producing a fiber-reinforced composite material.

### Solution to Problem

The present inventors have diligently examined to find that a film in which a specific amount of a powder is adhering to a polyvinyl alcohol film is superior in releasability from molded bodies, and performed further examination based on the finding, completing the present invention.

Specifically, the present invention provides [1] to [13] in the following.
[1] A film, wherein
   a powder is adhering to at least one face of a polyvinyl alcohol film, wherein a percent area occupancy of the powder is 0.05 to 5% based on the film area.
[2] The film according to [1], wherein the polyvinyl alcohol film contains a polyvinyl alcohol and a plasticizer, and a content of the plasticizer is 5 to 30 parts by mass based on 100 parts by mass of the polyvinyl alcohol.
[3] The film according to [1] or [2], having a thickness of 15 to 100 µm.
[4] The film according to any one of [1] to [3], wherein the powder has an average particle diameter of 5 to 30 µm.
[5] The film according to any one of [1] to [4], wherein the powder is modified starch subjected to water-repellent processing.
[6] The film according to any one of [1] to [5], wherein the polyvinyl alcohol has a degree of polymerization of 500 to 6,000 and a degree of saponification of 80 to 99.9 mol%.
[7] The film according to any one of [2] to [6], wherein the plasticizer is any one selected from the group consisting of ethylene glycol, glycerin, diglycerin, propylene glycol, and diethylene glycol.
[8] The film according to any one of [1] to [7], wherein at least one face of the polyvinyl alcohol film has been subjected to coating treatment with any one selected from the group consisting of: a polymer containing at least one monomer unit selected from the group consisting of styrene and a (meth)acrylic acid ester; an aqueous polyvinyl alcohol solution; and a polyvinyl alcohol-based emulsion, and the powder is adhering to the face subjected to the coating treatment.
[9] A laminate formed by laminating a release film composed of the film according to any one of [1] to [8] and an uncured fibrous composite material.
[10] A method for producing a fiber-reinforced composite material, comprising curing the uncured fibrous composite material in the laminate according to [9] under reduced pressure, and then releasing the release film from the cured fibrous composite material.
[11] The method for producing a fiber-reinforced composite material according to [10], wherein the laminate is covered with a bagging film composed of the film, and the resulting interior space is then depressurized by vacuuming, and then the uncured fibrous composite material is cured under reduced pressure.
[12] The film according to any one of [1] to [8], being a release film for producing a fiber-reinforced composite material.
[13] The film according to any one of [1] to [8], being a bagging film for producing a fiber-reinforced composite material.

### Advantageous Effects of Invention

The present invention provides a film superior in workability in molding and releasability from molded bodies, the film being fluorine-free and applicable as a release film or bagging film for use in producing a fiber-reinforced composite material. In addition, the present invention provides a laminate including the film and a method for producing a fiber-reinforced composite material.

### Brief Description of Drawing

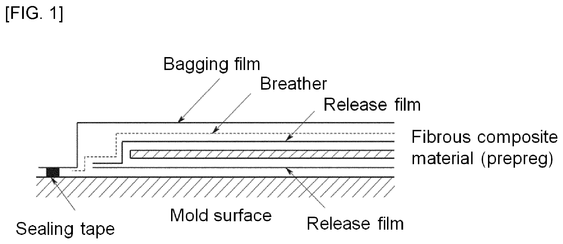

[Figure 1] Figure 1 is a cross-sectional view of a vacuum-bag system, an embodiment of the present invention, to be used for producing a fiber-reinforced composite material.

### Description of Embodiments

### [Film]

The film of the present invention is a film, wherein a powder is adhering to at least one face of a polyvinyl alcohol film, wherein a percent area occupancy of the powder is 0.05 to 5% based on the film area.

Herein, a film having no powder adhering thereto is referred to as a "polyvinyl alcohol film", and a film having a powder adhering thereto, which is the present invention, is referred to as a "film".

The mechanism of action of the present invention is considered as follows. In forming unevenness by allowing a powder to adhere to a surface of a polyvinyl alcohol film, use of the powder in an amount of adhesion within a specific range allows the polyvinyl alcohol film to come into contact with a prepreg over a moderate adhesion area in molding processing, resulting in achievement of favorable releasability from molded bodies.

### <PVA>

In the present invention, a product obtained by saponification of a vinyl ester polymer, which results from polymerization of a vinyl ester monomer, can be used as polyvinyl alcohol (PVA). Examples of the vinyl ester monomer can include vinyl formate, vinyl acetate, vinyl propionate, vinyl valerate, vinyl laurate, vinyl stearate, vinyl benzoate, vinyl pivalate, and vinyl versatate; among these, vinyl acetate is preferred in terms of, for example, easiness in PVA production, availability, and cost.

The vinyl ester polymer is preferably one obtained by using only one or two or more vinyl ester monomers as the monomer, and more preferably one obtained by using only one vinyl ester monomer as the monomer, whereas the vinyl ester polymer may be a copolymer of one or two or more vinyl ester monomers and an additional monomer capable of copolymerizing with them.

Examples of such additional monomers capable of copolymerizing with vinyl ester monomers can include: ethylene; olefins having 3 to 30 carbon atoms such as propylene, 1-butene, and isobutene; acrylic acid or a salt thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid or a salt thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives such as acrylamide, N-methylacrylamide, N-ethylacrylamide, N,N-dimethylacrylamide, diacetoneacrylamide, acrylamidepropanesulfonic acid or a salt thereof, acrylamidepropyldimethylamine or a salt thereof, and N-methylolacrylamide or a derivative thereof; methacrylamide derivatives such as methacrylamide, N-methylmethacrylamide, N-ethylmethacrylamide, methacrylamidepropanesulfonic acid or a salt thereof, methacrylamidepropyldimethylamine or a salt thereof, and N-methylolmethacrylamide or a derivative thereof; N-vinylamides such as N-vinylformamide, N-vinylacetamide, and N-vinylpyrrolidone; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides such as acrylonitrile and methacrylonitrile; vinyl halides such as vinyl chloride, vinylidene chloride, vinyl fluoride, and vinylidene fluoride; allyl compounds such as allyl acetate and allyl chloride; maleic acid or a salt, ester, or anhydride thereof; itaconic acid or a salt, ester, or anhydride thereof; vinylsilyl compounds such as vinyltrimethoxysilane; and isopropenyl acetate. The vinyl ester polymer can have structural units derived from one or two or more of those additional monomers.

Preferred among those additional monomers capable of copolymerizing with vinyl ester monomers from the viewpoint of the mechanical properties of the film are olefins having a small number of carbon atoms such as ethylene and propylene, carboxylic acid monomers such as acrylic acid and methacrylic acid, and sulfonic acid monomers.

From the viewpoints of the mechanical properties of the polyvinyl alcohol film and prevention of hole opening, the upper limit of the proportion of structural units derived from additional monomers in the vinyl ester polymer is preferably 15 mol% or less, more preferably 10 mol% or less, and further preferably 5 mol% or less based on the number of moles of all structural units constituting the vinyl ester polymer.

In the present invention, the degree of polymerization of the PVA contained in the polyvinyl alcohol film is not limited, but preferably 500 to 6,000. If the degree of polymerization of the PVA is less than 500, the film may have insufficient strength. The lower limit of the degree of polymerization of the PVA is preferably 600 or more, more preferably 1,000 or more, and further preferably 1,500 or more. If the degree of polymerization of the PVA is more than 6,000, on the other hand, it may be difficult to ensure productivity for the PVA or the polyvinyl alcohol film. The upper limit of the degree of polymerization of the PVA is preferably 5,000 or less, more preferably 4,000 or less, and further preferably 3,500 or less. Here, the degree of polymerization is average degree of polymerization (Po) as determined in accordance with description in JIS K6726-1994; in the determination, the PVA is re-saponified and purified, the limiting viscosity [η] (deciliter/g) is then measured in water at 30°C, and the average degree of polymerization is calculated with the limiting viscosity by the following formula. $Po = {\left(\left[η\right]\times {10}^{4}/8.29\right)}^{\left(1/0.62\right)}$

In the present invention, the degree of saponification of the PVA contained in the polyvinyl alcohol film is preferably 80 to 100 mol%. The degree of saponification of 80 mol% or more allows the polyvinyl alcohol film, and even the film of the present invention with it, to have enhanced strength. The lower limit of the degree of saponification is preferably 90 mol%, more preferably 95 mol% or more, and further preferably 99 mol% or more. The upper limit of the degree of saponification is preferably 99.9 mol% from the viewpoint of PVA productivity. Here, the degree of saponification of the PVA is the proportion of the number of moles (mol%) of vinyl alcohol units to the total number of moles of structural units that can be converted into the vinyl alcohol units through saponification (typically, vinyl ester monomer units) and vinyl alcohol units in the PVA. The degree of saponification of the PVA can be determined in accordance with description in JIS K6726-1994.

For the PVA in the film of the present invention, one PVA may be used alone; alternatively, a blend of two or more PVAs differing in degree of polymerization or degree of saponification, or degree of modification or the like.

In the present invention, the upper limit of the PVA content ratio in the polyvinyl alcohol film is not limited, and the lower limit of the PVA content ratio is preferably 50% by mass or more, more preferably 80% by mass or more, and further preferably 85% by mass or more to 100% by mass of the polyvinyl alcohol film.

### <Plasticizer>

In the present invention, the polyvinyl alcohol film may contain a plasticizer. The amount of the plasticizer contained is preferably 5 to 30 parts by mass based on 100 parts by mass of the PVA. With the inclusion of the plasticizer, softness equivalent to those of other plastic films is successfully imparted. This results in favorability in mechanical strength such as impact strength and process passibility in secondary processing.

Examples of the plasticizer include polyhydric alcohols such as ethylene glycol, glycerin, diglycerin, propylene glycol, diethylene glycol, triethylene glycol, tetraethylene glycol, polyethylene glycol, trimethylolpropane, and sorbitol. From the viewpoint of less occurrence of bleed-out to a surface of the polyvinyl alcohol film, the plasticizer is preferably any one selected from the group consisting of ethylene glycol, glycerin, diglycerin, propylene glycol, and diethylene glycol.

### <Polyvinyl alcohol film>

In the present invention, the lower limit of the amount of the plasticizer contained in the polyvinyl alcohol film is preferably 1 part by mass or more, more preferably 3 parts by mass or more, and further preferably 5 parts by mass or more based on 100 parts by mass of the PVA from the viewpoint of allowing the polyvinyl alcohol film to have mechanical strength and handleability in combination. On the other hand, the upper limit of the amount of the plasticizer contained is preferably 50 parts by mass or less, more preferably 40 parts by mass or less, further preferably 30 parts by mass or less, and particularly preferably 20 parts by mass or less based on 100 parts by mass of the PVA.

In the present invention, the polyvinyl alcohol film can be allowed to contain the plasticizer by adding the plasticizer to a film-forming stock solution for the polyvinyl alcohol film. The proportion of the amount of the plasticizer contained in the polyvinyl alcohol film is substantially equal to the proportion of the amount of the plasticizer added to the film-forming stock solution for the polyvinyl alcohol film.

In the present invention, the polyvinyl alcohol film may contain a component other than the PVA and the plasticizer, such as moisture, a surfactant, an antioxidant, an ultraviolet absorber, a lubricant, a filler, a crosslinking agent, a coloring agent, a preservative, an antifungal agent, a water-soluble polymer other than the PVA, and an additional polymer compound, in a manner without interfering with the effects of the present invention. The proportion of the total value of the masses of the PVA and the plasticizer to the total mass of the polyvinyl alcohol film is preferably within a range of 60 to 100% by mass, more preferably within a range of 80 to 100% by mass, and further preferably within a range of 90 to 100% by mass.

In the present invention, the thickness of the polyvinyl alcohol film is not limited, and the upper limit of the thickness is preferably 100 µm or less, more preferably 90 µm or less, further preferably 80 µm or less, and particularly preferably 70 µm or less. With the polyvinyl alcohol film having a thickness equal to or smaller than the upper limit, the film of the present invention has favorable handleability, and it is easy to ensure sufficient productivity for the polyvinyl alcohol film. On the other hand, the thickness of the polyvinyl alcohol film is preferably 15 µm or more, more preferably 20 µm or more, further preferably 30 µm or more, particularly preferably 40 µm or more, and most preferably 45 µm or more. With the polyvinyl alcohol film having a thickness equal to or larger than the lower limit, the film of the present invention has favorable workability in molding processing. The thickness of the polyvinyl alcohol film can be determined as the mean value of thicknesses measured at any 10 positions (e.g., any 10 positions on a line drawn along the length direction of the polyvinyl alcohol film).

Containing the plasticizer and satisfying the thickness range, the film of the present invention is superior in workability in attaching and/or releasing the film and conformable to molds of complex shape, thus being applicable as a hybrid film having functions of a release film and a bagging film in combination.

### <Powder>

In the film of the present invention, a powder is adhering to at least one face of a polyvinyl alcohol film, and a percent area occupancy of the powder is 0.05 to 5% based on the film area. This configuration allows the film to come into contact with a prepreg over a moderate adhesion area in molding processing, resulting in good releasability from molded bodies. The upper limit of the percent area occupancy is preferably 3%, more preferably 2%, and further preferably 1%. The lower limit of the percent area occupancy is preferably 0.1%. In the present invention, the phrase "the powder is adhering to at least one face of the PVA film" means such a state that, on one or each face of the PVA film, (1) at least some of the particles are in electrostatic contact with the surface of the film, (2) at least some of the particles are embedded in the surface of the film, or (3) at least some of the particles are in electrostatic contact with the surface of the film and at least some of the particles are embedded in the surface of the film. Here, the percent area occupancy of the powder is the proportion of the total value of areas occupied by the powder based on the observation area (film area) when the film is observed through a microscope. In the present invention, the percent area occupancy of the powder based on the area of the film is a value determined by a method explained later in Examples.

Examples of the powder in the present invention include organic powders and inorganic powders. Examples of the organic powders include starches, and examples of the starches can include: natural starches such as corn starch, potato starch, sweet potato starch, wheat starch, rice starch, tapioca starch, and sago starch; and modified starches subjected to etherification processing, esterification processing, oxidation processing, water-repellent processing, or other processing. Among these, modified starches are preferred, and modified starch subjected to water-repellent processing is more preferred. Examples of the inorganic powders include silica, ground, precipitated, or surface-treated calcium carbonate, aluminum hydroxide, aluminum oxide, titanium oxide, diatomaceous earth, barium sulfate, calcium sulfate, zeolite, zinc oxide, silicic acid, silicates, mica, magnesium carbonate, clay such as kaolin, halloysite, pyrophyllite, and sericite, and talc. One of these may be used alone; alternatively, a mixture of two or three or more thereof can be used.

The powder may have any average particle diameter without limitation, unless the effects of the present invention are impaired; however, if the powder has an average particle diameter within a specific range, unevenness is moderately formed on a film surface, resulting in favorable releasability from molded bodies. Accordingly, the lower limit of the average particle diameter of the powder is preferably 5 µm or more, and more preferably 10 µm or more. On the other hand, the upper limit of the average particle diameter of the powder is preferably 30 µm or less, and more preferably 20 µm or less. In the present invention, the average particle diameter of the powder is a value determined by a method explained later in Examples.

The powder may have any particle size without limitation, unless the effects of the present invention are impaired, though having coarse particles and fine particles removed is preferred because favorable handleability is obtained in producing the polyvinyl alcohol film and uniform adhesion is successfully achieved. The particle size of the powder is preferably 99% or more, and more preferably 99.9% or more as sieve-passing percentage. While the particle size of the powder can be evaluated by using standard sieves, suitable standard sieves can be selected to fit with the particle diameters of the powder to be used, and the mesh sizes of the sieves are, for example, 75 to 105 microns.

In the present invention, the amount of adhesion of the powder on the film is preferably 0.1 to 100 mg/m³. The upper limit of the amount of adhesion is more preferably 50 mg/m³, and further preferably 30 mg/m³. The lower limit of the amount of adhesion is more preferably 0.5 mg/m³, and further preferably 1 mg/m³. The amount of adhesion of the powder being equal to or smaller than the upper limit makes it easier to prevent poor process passibility in production of the film and molding.

In the present invention, the powder is adhering to at least one face of the polyvinyl alcohol film, and may be adhering to both faces, and it is preferable that the powder is adhering to both faces because favorable release is successfully obtained irrespective of which direction the film is facing and, when the film is disposed between a mold and a prepreg, favorable release is successfully achieved between the surfaces of the mold and molded body.

The surface of the film of the present invention may be embossed, unless the effects of the present invention are impaired. Embossing is a processing method of nipping a film with an embossing roll and a rubber roll while heat or pressure is applied typically after the film has been formed.

In the present invention, at least one face of the polyvinyl alcohol film may be subjected to coating treatment with a liquid coating agent, unless the effects of the present invention are impaired. It is preferable that the powder is adhering to a face of the polyvinyl alcohol film, the face having been subjected to the coating treatment. Examples of the coating agent include a polymer containing at least one monomer unit selected from the group consisting of styrene and a (meth)acrylic acid ester, an aqueous polyvinyl alcohol solution, a polyvinyl alcohol-based emulsion, an aqueous solution of a silicone-based water repellent, and a silicone-based emulsion. Preferred among these is any one selected from the group consisting of: a polymer containing at least one monomer unit selected from the group consisting of styrene and a (meth)acrylic acid ester; an aqueous polyvinyl alcohol solution; and a polyvinyl alcohol-based emulsion. Preferred as the polymer containing at least one monomer unit selected from the group consisting of styrene and a (meth)acrylic acid ester is a copolymer containing styrene units and (meth)acrylic acid ester units. For dispersing fine particles to be contained in the emulsion, any binder is applicable without limitation, and PVAs are preferred because the strong adhesion to the polyvinyl alcohol film inhibits the peeling-off of the coat layer and the superiority in releasability from molded bodies. Such a PVA is appropriately selected from the PVAs to be used for the polyvinyl alcohol film.

The average particle diameter of the fine particles contained in the emulsion is not limited, and can be 0.020 to 0.5 µm. The fine particles are preferably those consisting of a polymer containing at least one monomer unit selected from the group consisting of styrene and a (meth)acrylic acid ester. Examples of the polymer include those shown above to be used for the coating agent.

In the present invention, the amount of coating in the coating treatment is not limited, and 0.005 to 0.050 g/m² for one face is employed as the amount of fine particles to be contained in the emulsion.

The loop stiffness of the film of the present invention is preferably 0.30 to 3.0 g, more preferably 0.50 to 2.8 g, and further preferably 0.50 to 1.00 g at 23°C and 50% RH from the viewpoints of disposition on fibrous composite materials and handleability. The loop stiffness is preferably within a range of 0.30 to 3.0 even at 20°C and 20% RH because of superior handleability even at low temperature and low humidity in the winter. An explanation on how to measure the loop stiffness will be obtained later.

### <Method for producing film>

Any method may be used for producing the film of the present invention without limitation, and film formation can be performed by any method such as a method in which a film-forming stock solution obtained by adding a solvent, a plasticizer, and an additive or the like to PVA to homogenize is used for film formation by a casting film formation method, a wet film formation method (discharge into poor solvent), a dry-wet film formation method, a gel film formation method (a method in which a film-forming stock solution is temporarily gelled by cooling and the solvent is then removed by extraction to give a polyvinyl alcohol film), or a combination of any of them, a melt-extrusion film formation method in which a film-forming stock solution is extruded by using an extruder or the like and provided through a T die or the like, and an inflation molding method. Among these, the casting film formation method or melt-extrusion film formation method is preferred because uniform polyvinyl alcohol films can be obtained with good productivity. The following explains the casting film formation method or melt-extrusion film formation method for polyvinyl alcohol films.

In producing a polyvinyl alcohol film by the casting film formation method or melt-extrusion film formation method, a film-forming stock solution is cast onto a support to form a liquid thin layer, which is heated to remove the solvent, thereby solidifying to form a film. The solidified film is released from the support, dried with a drying roll, a drying furnace, or the like, as necessary, further heat-treated, as necessary, and wound to give a roll-shaped, long-length polyvinyl alcohol film.

The upper limit of the volatile fraction (the concentration of volatile components such as solvent that are to be removed through volatilization or evaporation in film formation) of the film-forming stock solution is preferably 90% by mass or less, and more preferably 80% by mass or less. With the volatile fraction of the film-forming stock solution being equal to or lower than the upper limit, the polyvinyl alcohol film to be obtained is readily prevented from having impaired thickness uniformity due to excessively low viscosity imparted to the film-forming stock solution. On the other hand, the lower limit of the volatile fraction of the film-forming stock solution is preferably 50% by mass or more, and more preferably 55% by mass or more. With the volatile fraction of the film-forming stock solution being equal to or higher than the lower limit, difficulty in producing the polyvinyl alcohol film because of excessively high viscosity imparted to the film-forming stock solution is readily prevented.

Here, "the volatile fraction of the film-forming stock solution" in the present specification is a volatile fraction determined by the following formula: $\begin{matrix}Volatile fraction \left(% by mass\right) of film - forming stock solution \\ = \left\{\left(Wa-Wb\right)/Wa\right\} \times 100\end{matrix}$ wherein Wa denotes the mass (g) of the film-forming stock solution, and Wb denotes the mass (g) of the film-forming stock solution after drying in an electric dryer at 105°C for 16 hours.

Any method may be used for preparing the film-forming stock solution without limitation, and examples thereof include a method of dissolving PVA, a plasticizer, and an additive such as a surfactant in a dissolution tank or the like, and a method of melt-kneading hydrated PVA together with a plasticizer and a surfactant or the like by using a single- or twin-screw extruder. Preferred among these is the method of dissolving in the dissolution tank or the like or the method with the twin-screw extruder.

The film-forming stock solution prepared is sent to a T die or the like through piping or the like, and discharged through the die lip to give a thin layer on a support. The upper limit of the surface temperature of the support onto which the film-forming stock solution is cast is preferably 110°C or less, more preferably 100°C or less, and further preferably 95°C or less. During heating and drying the liquid thin layer on the support, the drying speed may be simultaneously controlled by blowing hot air uniformly to the whole region of the non-contact face of the liquid thin layer.

The liquid thin layer formed by casting the film-forming stock solution to give a thin layer on the support is dried on the support preferably until a volatile fraction of 5 to 50% by mass is reached, then released, and further dried, as necessary. Any method may be used for drying without limitation, and examples thereof include a method with a drying furnace or by bringing into contact with a drying roll. In drying with multiple drying rolls, bringing one face and the other face of the liquid thin layer alternately in contact with one drying roll and another is preferred in order to impart uniform physical properties to both faces of the resulting polyvinyl alcohol film.

Preferred is inclusion of a step of heat-treating the polyvinyl alcohol film under a condition of 80 to 300°C. The upper limit of the temperature in the heat treatment is more preferably 280°C or less, further preferably 260°C or less, and particularly preferably 240°C or less. With the temperature in the heat treatment being equal to or lower than the upper limit, poor workability in molding due to excessive hardness imparted to the film is readily prevented. On the other hand, the lower limit of the temperature in the heat treatment is more preferably 90°C or more, further preferably 100°C or more, and particularly preferably 105°C or more. With the temperature in the heat treatment being equal to or higher than the lower limit, the resulting film tends to be favorable in workability in molding.

The upper limit of the volatile fraction of the polyvinyl alcohol film finally obtained through a series of processing is preferably 5% by mass or less, and more preferably 4% by mass or less. The lower limit of the volatile fraction of the polyvinyl alcohol film is preferably 1% by mass or more, and more preferably 2% by mass or more.

The powder to be adhered to the polyvinyl alcohol film is as described above, and preferably passed through sieves such as meshes in advance to adjust the average particle diameter size.

Known powder coating methods can be used as a method of adhering the powder onto the polyvinyl alcohol film. Examples of the powder coating methods include an electrostatic powder coating method and a fluidized-bed coating method. The electrostatic powder coating method is a method in which a powder is electrostatically charged with a spray gun and adhered onto a film by means of the static electricity. The amount of the powder to be adhered onto the polyvinyl alcohol film can be varied by adjusting the amount of charge in the powder or the temperature of the polyvinyl alcohol film. In the fluidized-bed coating method, a powder coating material is put in a container (fluidized-bed tank) having a porous plate as the bottom plate, and the powder coating material is scattered into a fluidized state by feeding compressed air or inert gas from the bottom. By passing a polyvinyl alcohol film through the container in which the powder coating material is fluidized, the powder coating material adheres onto the polyvinyl alcohol film. The amount of the powder to be adhered onto the polyvinyl alcohol film and the percent area occupancy of the powder based on the film area are adjustable with the conveyance speed of the polyvinyl alcohol film in passing through the container, the concentration of the powder in the container, or the temperature of the polyvinyl alcohol film. For example, preliminary warming of the polyvinyl alcohol film softens the surface of the film, facilitating the adhesion of the powder.

The film of the present invention may be treated with the above liquid coating agent, as necessary. Examples of methods of coating treatment with the liquid coating agent include a roll-coater method, an air-doctor method, a blade-coater method, a spraying method, and a dipping method, and the roll coater method and the dipping method are preferred. Application can be performed by any of the methods with a commercially available coating agent.

Further drying is preferably performed, as necessary, after the application of the coating liquid. For example, the temperature in the drying can be set within a range of 70 to 110°C. A drying time of 1 to 30 seconds can be employed. The drying may be performed under normal pressure or under reduced pressure.

The film of the present invention may be subjected to embossing of a film surface, as necessary. Any of the face not in contact with the support and the face in contact with the support may be embossed. Embossing can be performed, for example, by passing the film between an embossing roll and a backup roll.

The order of the powder coating, application of the liquid coating agent, and embossing described above is not limited.

The film thus produced is further subjected to, for example, humidity control treatment or cutting-out of the film ends (edges), as necessary, then wound on a cylindrical core into the form of a roll, and put in a moisture-proof package to give a product. The film of the present invention may be further subjected to treatment such as coating, embossing, humidity control treatment, cutting-out of the film ends (edges), and slitting, as necessary. Such treatments may be performed before or after the step of adhering the powder onto the polyvinyl alcohol film after producing the polyvinyl alcohol film, and the order of the treatments is not limited.

### [Laminate]

In the laminate of the present invention, an uncured fibrous composite material and a release film composed of the film of the present invention are laminated. The film of the present invention in the laminate of the present invention is preferably laminated on each face of the uncured fibrous composite material. In the case that the mold is coated with a release agent, the film of the present invention may be laminated on a face of the uncured fibrous composite material, the face not facing the mold. In this case, the laminate of the present invention allows the fiber-reinforced composite material after curing to be taken out with ease because the film of the present invention is superior in releasability from molded bodies. Moreover, being a fluorine-free film, the film of the present invention that has been released after curing can be incinerated. Examples of fibrous materials for the fibrous composite material include fabrics of carbon fiber, glass fiber, aramid fiber, or polyethylene fiber, and fabrics of carbon fiber are preferred because fiber-reinforced composite materials to be obtained are superior in mechanical properties and light-weight properties. Examples of resins to be used for fiber-reinforced composite materials include epoxy, unsaturated polyester, vinyl ester, bismaleimide, phenolic, cyanate, and polyimide resins, and epoxy resins are preferred because of the availability and the superiority of fiber-reinforced composite materials to be obtained in terms of characteristics. The film may be laminated on a prepreg having a fibrous material impregnated in advance with resin, and alternatively a fibrous material having the film laminated thereon may be impregnated with liquid resin like vacuum-assisted RTM.

### [Method for producing fiber-reinforced composite material]

A fiber-reinforced composite material can be produced by curing the uncured fibrous composite material in the laminate under reduced pressure and then releasing the release film from the cured fibrous composite material. At that time, it is preferable to cover the laminate with a bagging film and then depressurize the resulting interior space by vacuuming, and then cure the uncured fibrous composite material under reduced pressure, and specifically a vacuum-bag system described later can be employed. The film of the present invention is suitably used as the bagging film. The curing of the resin can be performed only through vacuum-bag pressure in an oven. Solidification of the fiber layer can be achieved at an even higher level by curing the resin in an autoclave at high temperature and high pressure. The curing can be performed even with the aid of a catalyst, irrespective of the presence or absence of application of high temperature. The curing temperature is preferably 100 to 200°C. The film of the present invention is suitably used as a release film or bagging film for producing such a fiber-reinforced composite material.

### [Release film or bagging film]

In molding methods using a mold on one face, such as AC molding, oven molding, and vacuum-assisted RTM, an intended resin-fiber ratio at which the composite material exhibits desired mechanical characteristics is successfully achieved through the use of a vacuum-bag system, in which the fibrous composite material disposed in a mold is pressed onto the mold to remove air confined between layers. The vacuum-bag system is a system for performing molding with a vacuum bag (e.g., AC molding). The vacuum bag is a bag having a shape the inside of which becomes a vacuum by evacuating the inside. The vacuum bag may be, for example, in a bag shape, but the shape is not limited thereto. For example, the vacuum bag may be composed only of a bagging film, or of a bagging film and an additional member (e.g., a mold). In the vacuum-bag system, a fibrous composite material, a peel ply, a release film, and a breather are sequentially laminated in this order, and a bagging film is attached on a mold by sealing with seal tape to cover them. The peel ply may be omitted in some cases. To the bagging film, a suction port to draw air from the internal space between the bagging film and the mold is provided, and the suction port and a vacuum pump are connected via a hose for vacuuming. The breather is a nonwoven fabric to provide an air escape route in vacuuming the internal space. The release film is disposed to allow the breather and the bagging film to be removed from the fiber-reinforced composite material resulting after curing. The release film can be used also for facilitating release of the fiber-reinforced composite material resulting after curing from the mold through being further disposed between the mold and the fibrous composite material.

The film of the present invention can be used as a release film in forming the fiber-reinforced composite material by molding, and hence a method with the film as a release film is also a mode of the present invention. Being superior in releasability from molded bodies, the film of the present invention, when the film is used as a release film or the method of the present invention with the release film is employed, allows the fiber-reinforced composite material after curing to be taken out with ease. Moreover, being a fluorine-free film, the film of the present invention that has been released after curing can be incinerated.

The film of the present invention can be used as a bagging film in forming the fiber-reinforced composite material by molding, and hence a method with the film as a bagging film is also a mode of the present invention. More specifically, in molding methods in which resin is cured under reduced pressure, such as AC molding, oven molding, and vacuum-assisted RTM, the bagging film can be used for making a sealed state for depressurizing. In particular, containing the plasticizer and satisfying the above thickness range, the film of the present invention is superior in workability in molding and conformable to molds and molded bodies of complex shape, and thus enables formation of molded bodies of high quality. While bagging films made of any other conventional material may become hard at low temperature and low humidity in the winter to result in poor workability in molding, the film of the present invention, for which the amount of the plasticizer contained therein and the thickness have been controlled within the proper ranges, is superior in workability even at low temperature and low humidity.

The film of the present invention is applicable as any of a release film and a bagging film in forming a fiber-reinforced composite material by molding. Use of the film of the present invention for both a release film and a bagging film enables easy material management and thus reduction in the variety of materials to be used.

### Examples

The following more specifically describes the present invention with examples, but the present invention is by no means limited to those examples. Evaluation methods employed in the examples and comparative example shown below are shown in the following.

### <Percent area occupancy and average particle diameter of powder>

A film obtained in each of the examples and comparative example shown below was cut into a sample of 5 cm × 5 cm, which was put in a metal frame, and the face not to be observed was wiped with a dry paper wiper, and the sample was then observed by using a "VHX-6000" manufactured by KEYENCE CORPORATION at a magnification of 500. For the observed image, brightness extraction (Extraction target: Bright area, Threshold: 0, Eliminate small particles: ON) was performed by using automatic area measurement functions, and "Eliminate uneven brightness (Weak) + Generally blurred image" was selected. For the selected image, the proportion of powder area based on the film area in the screen and the average particle diameter (the mean value of the minimum diameter and maximum diameter of a particle was defined as the average particle diameter of the particle) were automatically calculated. The mean values for n = 5 data were calculated.

### <Workability (release film)>

In molding test in each of the examples and comparative example shown below, workability in using a film as a release film was evaluated as follows.
A: Favorable.
B: A film workable but excessively soft or hard, thus being difficult to handle.
C: Difficult to dispose.

### <Release strength>

For releasability from molded bodies, release strength was measured by using a tensiometer having a clip attached thereto as follows.

From a fiber-reinforced composite material obtained in each of the examples and comparative example shown below with a release film on each face, a release film of 5 cm from a short side of the composite material was peeled off and pinched with the clip, and pulled in the vertical direction to measure the release strength in 90° release. Smaller release strength indicates favorable release.

### <Workability (bagging film)>

In molding test in each of the examples and comparative example shown below, workability in using a film as a bagging film was evaluated as follows.
A: Favorable.
B: A film workable but excessively thin or hard, thus being difficult to handle.
C: Unavailable.

### <Flexibility of film (loop stiffness)>

The flexibility of a film obtained in each of the examples and comparative example shown below was measured by using a "Loop Stiffness Tester No. 581" manufactured by Toyo Seiki Seisaku-sho, Ltd.

The film was subjected to humidity control at 23°C and 50% RH for 16 hours or more, and cut into a sample in the shape of a strip of 15 mm × 200 mm, and the sample was fixed to the apparatus to form a loop of 55 mm in length. The sample was pressed with a pressing plate in such a manner that the distance between the pressing plate and the apparatus reached 10 mm, and the crush resistance 1 minute after the start of operation was recorded as a measurement. Measurement was performed for n = 5 samples, and the mean value was calculated.

As an indicator of workability at low temperature and low humidity in the winter, the crush resistance under conditions of 20°C and 20% RH was additionally measured with the loop stiffness tester.

### [Example 1]

A film-forming stock solution consisting of 100 parts by mass of PVA (degree of polymerization: 1,700, degree of saponification: 99.9 mol%), 13 parts by mass of glycerin as a plasticizer, 0.1 parts by mass of lauric acid diethanolamide as a surfactant, and water and having a volatile fraction of 68% was melt-extruded from a T die through metal rolls at 90°C, dried, and then subjected to heat treatment with heat-treatment rolls having a surface temperature of 120°C to give a polyvinyl alcohol film having a thickness of 50 µm. Onto both faces of the polyvinyl alcohol film obtained, methyl methacrylate/styrene copolymer was applied by the dipping method at a rate of 0.020 g/m² for each face, and the resultant was dried with hot air at 100°C for 30 seconds, giving a coated polyvinyl alcohol film. The coating solution used at that time was a product prepared by adding an emulsion of methyl methacrylate/styrene copolymer (methyl methacrylate unit / styrene unit (mole ratio) = 50/50) having an average particle diameter of 0.1 µm (with particles of the methyl methacrylate/styrene copolymer dispersed in water to give a concentration of 30% by mass) to an aqueous PVA solution containing 1.5% by mass of PVA having a degree of polymerization of 2400 and a degree of saponification of 99.2 mol% at [PVA] / [methyl methacrylate/styrene copolymer] (mass ratio) = 3/1. Subsequently, modified starch subjected to water-repellent processing as a powder was adhered onto one face of the polyvinyl alcohol film after the coating by using an electronic spray, and the powder was then adhered also onto the other face in the same manner; thus, a film was obtained. The powder on the film obtained had a percent area occupancy of 0.17% based on the film area and an average particle diameter of 13.1 µm. The flexibility of the film obtained at 23°C and 50% RH and that at 20°C and 20% RH were measured by the method explained above, and found to be 0.56 g and 2.75 g, respectively.

The film obtained was used as a release film and a bagging film, and molding test was conducted for them. The film was cut into pieces of 20 cm × 27.5 cm, and three prepregs (fibrous material: 3K plain-woven carbon fiber, resin: epoxy resin curable at 130°C) of the same size were stacked on one piece of the film, and another piece of the film of the same size was further disposed on the top; thus, a laminate was obtained. The workability in disposing the release films was favorable. On the laminate obtained, a breather of the same size was stacked, and the resultant was covered with the bagging film having a suction port provided, sealed by attaching seal tape, and vacuumed. The workability in covering the laminate with the bagging film was favorable. The resultant was put in an autoclave and left to stand under normal pressure at 80°C for 30 minutes, and curing was then performed at 3 atm and 130°C for 60 hours. The bagging film was removed to give a fiber-reinforced composite material having the release film of 20 cm × 27.5 cm in size laminated on each face. The release strength of the release films from the fiber-reinforced composite material obtained was measured, and found to be 0.29 g.

### [Example 2]

A film was produced and subjected to molding test in the same manner as in Example 1, except that the amount of the plasticizer was changed to 9 parts by mass based on 100 parts by mass of PVA. The results are shown in Table 1.

### [Example 3]

A film was produced and subjected to molding test in the same manner as in Example 1, except that coating with the methyl (meth)acrylate/styrene copolymer was not performed. The results are shown in Table 1.

### [Example 4]

A film was produced and subjected to molding test in the same manner as in Example 1, except that coating with the methyl (meth)acrylate/styrene copolymer was not performed and a mixture of modified starch subjected to water-repellent processing and talc at a ratio of 1:1 was used as a powder. The results are shown in Table 1.

### [Example 5]

A film was produced and subjected to molding test in the same manner as in Example 1, except that the thickness of the polyvinyl alcohol film was set to 25 µm. The film was excessively thin and soft, and hence had difficulty in handling when the release films were disposed and when the laminate was covered with the bagging film. The results are shown in Table 1.

### [Example 6]

A film was produced and subjected to molding test in the same manner as in Example 1, except that the plasticizer was not contained, coating with the methyl (meth)acrylate/styrene copolymer was not performed, and a mixture of modified starch subjected to water-repellent processing and talc at a mass ratio of 1:1 was used as a powder. The film was excessively hard, and hence had difficulty in handling when the release films were disposed. The excessive hardness of the film prevented the laminate from being successfully covered without any leakage, and hence the film was difficult to handle as a bagging film. For this reason, molding test was conducted with use of the film in Example 1 as a bagging film in place of the present film. The results are shown in Table 1.

### [Comparative Example 1]

A film was produced and subjected to molding test in the same manner as in Example 1, except that the powder was not applied and coating with the methyl (meth)acrylate/styrene copolymer was not performed. In measuring the release strength, the film was not successfully released and broke, and hence measurement of the release strength failed. The results are shown in Table 1.

### [Reference Example 1]

Molding test was conducted in the same manner as in Example 1, except that a polyvinyl fluoride (PVF) film having a thickness of 25 µm was used as a release film in place of the film of the present invention in Example 1. The evaluation results for the release film are shown in Table 1.

### [Reference Example 2]

Molding test was conducted in the same manner as in Example 1, except that a nylon (Ny) film having a thickness of 50 µm was used as a bagging film in place of the film of the present invention in Example 1. The evaluation results for the bagging film are shown in Table 1.

**[Table 1]**

| | | Example 1 | Example 2 | Example 3 | Example 4 | Example 5 | Example 6 | Comparative Example 1 | Reference Example 1 | Reference Example 2 |
|---|---|---|---|---|---|---|---|---|---|---|
| Resin | | PVA | PVA | PVA | PVA | PVA | PVA | PVA | PVF | Ny |
| Amount of plasticizer ¹⁾ | parts by mass | 13 | 9 | 13 | 13 | 13 | 0 | 13 | - | - |
| Thickness | µm | 50 | 50 | 50 | 50 | 25 | 50 | 50 | 25 | 50 |
| Percent area occupancy of powder | % | 0.17 | 0.15 | 0.17 | 2.2 | 0.20 | 2.1 | - | - | - |
| Average particle diameter of powder | µm | 13.1 | 12.6 | 13.1 | 9.6 | 12.8 | 9.7 | - | - | - |
| Coating | | Presence | Presence | Absence | Absence | Presence | Absence | Absence | - | - |
| Workability (release film) | | A | A | A | A | B | B | A | A | - |
| Release strength | g | 0.29 | 0.42 | 0.77 | 1.95 | 0.52 | 1.89 | Unmeasurable ²⁾ | 0.06 | - |
| Workability (bagging film) | | A | A | A | A | B | C | A | - | A |
| Loop stiffness (23°C, 50% RH) | g | 0.56 | 0.88 | 0.53 | 0.55 | 0.09 | 3.10 | 0.53 | - | 1.18 |
| Loop stiffness (20°C, 20% RH) | g | 2.75 | 4.61 | 2.70 | 2.69 | 0.53 | 13.9 | 2.72 | - | 3.80 |

| | | | | | | | | | | |
|---|---|---|---|---|---|---|---|---|---|---|
| 1) The amount of a plasticizer contained based on 100 parts by mass of PVA in a PVA film. 2) Measurement failed because of break in releasing | | | | | | | | | | |

The films in the examples, in each of which a powder has been applied onto a surface of a polyvinyl alcohol film at a specific percent area occupancy, are superior in releasability from molded bodies. Moreover, the films in Examples 1 to 4, in each of which the polyvinyl alcohol film contains a plasticizer and has a thickness within a specific range, are superior also in workability in molding.

## Claims

1. A film, wherein
a powder is adhering to at least one face of a polyvinyl alcohol film, wherein a percent area occupancy of the powder is 0.05 to 5% based on the film area.

2. The film according to claim 1, wherein
the polyvinyl alcohol film contains a polyvinyl alcohol and a plasticizer, and
a content of the plasticizer is 5 to 30 parts by mass based on 100 parts by mass of the polyvinyl alcohol.

3. The film according to claim 1 or 2, having a thickness of 15 to 100 µm.

4. The film according to claim 1 or 2, wherein the powder has an average particle diameter of 5 to 30 µm.

5. The film according to claim 1 or 2, wherein the powder is modified starch subjected to water-repellent processing.

6. The film according to claim 1 or 2, wherein the polyvinyl alcohol has a degree of polymerization of 500 to 6,000 and a degree of saponification of 80 to 99.9 mol%.

7. The film according to claim 2, wherein the plasticizer is any one selected from the group consisting of ethylene glycol, glycerin, diglycerin, propylene glycol, and diethylene glycol.

8. The film according to claim 1 or 2, wherein at least one face of the polyvinyl alcohol film has been subjected to coating treatment with any one selected from the group consisting of: a polymer containing at least one monomer unit selected from the group consisting of styrene and a (meth)acrylic acid ester; an aqueous polyvinyl alcohol solution; and a polyvinyl alcohol-based emulsion, and the powder is adhering to the face subjected to the coating treatment.

9. A laminate formed by laminating a release film composed of the film according to claim 1 or 2 and an uncured fibrous composite material.

10. A method for producing a fiber-reinforced composite material, comprising curing the uncured fibrous composite material in the laminate according to claim 9 under reduced pressure, and then releasing the release film from the cured fibrous composite material.

11. The method for producing a fiber-reinforced composite material according to claim 10, wherein the laminate is covered with a bagging film composed of the film, and the resulting interior space is then depressurized by vacuuming, and then the uncured fibrous composite material is cured under reduced pressure.

12. The film according to claim 1 or 2, being a release film for producing a fiber-reinforced composite material.

13. The film according to claim 1 or 2, being a bagging film for producing a fiber-reinforced composite material.
